# EUROPÄISCHE PATENTSCHRIFT

(11) **EP 3 705 672 B1**
(45) Veröffentlichungstag und Bekanntmachung des Hinweises auf die Patenterteilung: **12.07.2023**
(21) Anmeldenummer: 19161509.5
(22) Anmeldetag: 08.03.2019
(51) Int. Cl.: E05D 11/00, B23B 47/28

(54) **WERKZEUG FÜR DIE MONTAGE VON ROLLENBÄNDERN AUF BAUPROFILEN**
TOOL FOR MOUNTING FITTINGS ON CONSTRUCTION PROFILES
OUTIL POUR LE MONTAGE DES PAUMELLES SUR DES PROFILÉS DE CONSTRUCTION

(43) Veröffentlichungstag der Anmeldung: 09.09.2020
(73) Patentinhaber: Glasbau Wäschle GmbH & Co. KG, 72469 Messstetten (DE)
(72) Erfinder: WÄSCHLE, Heinrich, 72469 Meßstetten (DE); WAGNER, Steffen, 72469 Meßstetten (DE)
(74) Vertreter: RDL Patentanwälte PartG mbB

(56) Entgegenhaltungen:
- EP-A1- 0 674 076
- CH-A- 540 735
- DE-U1- 9 010 314
- US-A- 2 778 121

## Beschreibung

Die vorliegende Erfindung betrifft Vorrichtungen und Verfahren für die Befestigung von Scharnieren (Rollenbändern) auf Tür- und Fensterbauprofilen.

Im Fenster- und Türenbau werden die Scharniere (nachstehend Bänder genannt), welche die Fensterflügel oder Türflügel halten, an den vertikalen Trägern durch Schraubverbindungen befestigt. Dabei ist es wichtig, dass sich die Bänder im Rahmen- und im Flügelprofil auf entsprechender Position befinden. In Betrieben ohne CNC-gesteuerte Fräs- und Bohrmaschinen werden in der Regel Bohrschablonen zur maßgenauen Anbringung der Bohrungen eingesetzt. Die Profile werden in der Werkstatt zugeschnitten, gebohrt, und so weit vormontiert, dass ein möglichst einfacher und schneller Einbau an der Baustelle realisiert werden kann.

Von verschiedenen Bänderherstellern werden Bohrschablonen angeboten. Sie dienen zur Anbringung der Bohrungen zur Befestigung der Bänder vor der Montage der Baugruppe. Die Bohrschablonen werden auf das zu bearbeitende Profil platziert. Die Schablonen werden nach einer Ausrichtung mittels Zollstock durch Schraubzwingen fixiert. Die in der Schablone verbauten Bohrbuchsen ermöglichen das Durchbohren der Profile. Die Positionen der verschiedenen Bohrbuchsen entsprechen den Positionen der Befestigungsbohrungen in den Bändern. Eine solche Gruppe von Bohrungen ist nachstehend als Bohrbild bezeichnet. Rollenbänder umfassen Bandlaschen zur Befestigung des Bandes an Rahmen und Flügel. Diese sind verbunden über eine Bandrolle mit einem Lagerbolzen. Die zum Verschrauben des Rollenbandes anzubringenden Bohrbilder befinden sich auf der Innenfläche des Tür- oder Fensterahmens und der Außenseite des Tür- oder Fensterflügels, da die Bandlaschen sich nach der Montage der Türe oder des Fensters im Zwischenraum von Rahmen und Flügel befinden. Es ist immer notwendig, Rahmen und Flügel einzeln mit Bohrungen für die Bänder zu versehen. Hierbei müssen die Bohrschablonen mehrfach aufgelegt werden. Eine gleichzeitige Bearbeitung von Rahmen und Flügel ist bislang nicht möglich.

Die Ausrichtung muss an jedem zu bearbeitenden Profil einzeln vorgenommen werden. Durch eine Ausrichtung mittels Zollstock ist bestenfalls eine Genauigkeit von ±1 mm realisierbar. Die Genauigkeit ist dabei wesentlich von der Sorgfalt des Ausführenden abhängig. Beim Verspannen mittels Schraubzwingen neigt die Bohrschablone zudem dazu, sich zu verschieben. Es kann daher vorkommen, dass das Bohrbild im Flügel nicht deckungsgleich mit dem Bohrbild im Rahmen ist. Weichen die Positionen um mehr als 1 mm voneinander ab, kann das Band nicht montiert werden.

Die CH 540735 A, die EP 0674076 A1 und die DE 9010314 U1 offenbaren Werkzeuge für die Montage eines Rollenbandes auf einem Rahmenprofil und einem zugeordneten Flügelprofil.

Die vorliegende Erfindung stellt ein Werkzeug und ein Verfahren bereit, mit dem sich die angesprochenen Nachteile des Standes der Technik überwinden lassen. Zudem wird die zur Bearbeitung der Profile und zur Montage der Bänder erforderliche Zeit um circa 2/3 verkürzt.

Gegenstand der Erfindung ist ein Werkzeug gemäß Anspruch 1, für die Montage eines Rollenbands
auf einem Rahmenprofil und einem zugeordneten Flügelprofil. Das Werkzeug umfasst Mittel zur Fixierung des Rahmenprofils und des Flügelprofils in einer Position, in der die Längsachsen des Rahmenprofils und des Flügelprofils parallel ausgerichtet sind und das Rahmenprofil und das Flügelprofil einen vorgegebenen Abstand zueinander aufweisen. Zudem umfasst das Werkzeug Mittel zur Positionierung und Fixierung eines Bohrbildes des zu montierenden Rollenbands auf dem Rahmenprofil und dem Flügelprofil.

Die Mittel zur Fixierung des Rahmenprofils und des Flügelprofils umfassen mindestens eine Auflage zur Aufnahme des Rahmenprofils und des Flügelprofils, die mindestens eine erste Struktur aufweist, die dafür konfiguriert ist, einen Vorsprung des Rahmenprofils aufzunehmen, und/oder mindestens eine zweite Struktur, die dafür konfiguriert ist, in eine Aussparung des Rahmenprofils einzugreifen, so dass eine Verschiebung des Rahmenprofils quer zur Längsachse des Rahmenprofils blockiert wird. Die mindestens eine Auflage weist mindestens eine dritte Struktur auf, die dafür konfiguriert ist, einen Vorsprung des Flügelprofils aufzunehmen, und/oder mindestens eine vierte Struktur, die dafür konfiguriert ist, in eine Aussparung des Flügelprofils einzugreifen, so dass eine Verschiebung des Flügelprofils quer zur Längsachse des Flügelprofils blockiert wird. Die mindestens eine Auflage ist dafür konfiguriert, das Rahmenprofil und das Flügelprofil auf der mindestens einen Auflage so zu fixieren, dass das Rahmenprofil und das Flügelprofil parallel zueinander ausgerichtet sind und einen vorgegebenen Abstand zueinander aufweisen.

In einer Ausführungsform umfasst die mindestens eine Auflage zwei separate Ausgleichselemente, von denen das eine Ausgleichselement dazu konfiguriert ist, mit dem Rahmenprofil zu wechselwirken und das andere Ausgleichselement dazu konfiguriert ist, mit dem Flügelprofil zu wechselwirken.

In einer Ausführungsform des erfindungsgemäßen Werkzeugs umfassen die Mittel zur Fixierung des Rahmenprofils und des Flügelprofils mindestens zwei bewegliche Spannbacken. Die Spannbacken sind parallel zur Längsachse der zu bearbeitenden Profile angeordnet. In einer weiteren Ausführungsform sind die Spannbacken über eine Gewindespindel aufeinander zu oder voneinander weg bewegbar. In einer Ausführungsform sind die Spannbacken leicht nach innen, d.h. in Richtung der zu fixierenden Profile, geneigt. Sie schließen mit der Horizontalen einen Winkel von 85 bis 90°, insbesondere von 88 bis 90°, beispielsweise 89° ein. Dadurch wird beim Einspannen der Profile eine bessere Fixierung erreicht, da die Spannbacken sich durch die mechanische Belastung beim Einspannen leicht nach außen biegen.

Das erfindungsgemäße Werkzeug umfasst eine U-förmige Spannvorrichtung, mit der zwei Profile (Flügel- und Rahmenprofil) gleichzeitig fixiert werden können. Dabei ist die Spannvorrichtung durch Ausgleichselemente so veränderbar, dass unterschiedliche Profilhöhen fixiert werden können. Dies ist oftmals notwendig, da das Flügelprofil andere Abmessungen als das Rahmenprofil besitzt. In einer weiteren Ausführungsform wird die Höhendifferenz über eine stufenlose Verstellung der Ausgleichselemente realisiert, beispielsweise über Gewinde oder ineinander greifende Keile.

Die Ausgleichselemente sind so gestaltet, dass sie in die Kontur des zu bearbeitenden Profils passen. Sie weisen an ihrer nach oben zeigenden Oberfläche Einbuchtungen oder Vorsprünge auf, die spiegelbildlich zu den Strukturen des zu bearbeitenden Profils geformt sind. In einer Ausführungsform werden die Ausgleichselemente in Schwalbenschwanzführungen in die Spannvorrichtung eingesetzt. Dadurch sind die Ausgleichselemente senkrecht zur Längsachse der zu bearbeitenden Profile verschiebbar. In einer weiteren Ausführungsform sind die Ausgleichselemente in einer beliebigen Position in der Schwalbenschwanzführung fixierbar, beispielsweis durch Fixierschrauben.

In einer speziellen Ausführungsform besteht jedes der Ausgleichselemente aus einem Basisblock, der in eine Schwalbenschwanzführung in der Basis der Spannvorrichtung eingesetzt und fixiert wird, und einem austauschbaren Aufsatz, dessen nach oben zeigende Oberfläche spiegelbildlich zur Kontur des zu fixierenden Profils geformt ist. In einer weiteren Ausführungsform weisen der Basisblock an seiner Oberseite und der Aufsatz an seiner Unterseite zueinander komplementäre Strukturen, z.B. Erhebungen und Aussparungen auf, die beim Aufsetzen des Aufsatzes auf den Basisblock ineinander greifen und den Aufsatz fixieren. In einer Ausführungsform weist der Aufsatz an seiner Unterseite Metallstifte auf, die in entsprechende Öffnungen an der Oberseite des Basisblocks eingreifen und den Aufsatz fixieren. In einer anderen Ausführungsform ist der Aufsatz mit dem Basisblock verschraubt. In einer weiteren Ausführungsform sind austauschbare Distanzblöcke seitlich an einem der Aufsätze befestigt, beispielsweise über seitlich an dem Distanzstück angeordnete Metallstifte, die in entsprechende Öffnungen an der Seite des Aufsatzes eingreifen. In einer anderen Ausführungsform ist das Distanzstück mit dem Aufsatz verschraubt. Über das austauschbare Distanzstück kann der Abstand zwischen dem Rahmenprofil und dem Flügelprofil vorgegeben werden. In einer Ausführungsform entspricht der Abstand dem Durchmesser der Bandrolle des zu montierenden Rollenbandes. Diese Ausführungsform, bei der die Auflage zur Aufnahme des Rahmenprofils und des Flügelprofils modular aus separaten Ausgleichselementen aufgebaut ist, die wiederum aus gleichen Basisblöcken und unterschiedlichen Aufsätzen und variablen Distanzelementen zusammengesetzt sind, bietet maximale Flexibilität. Mit einem einzigen erfindungsgemäßen Werkzeug lassen sich so unterschiedliche Rollenbänder und eine Vielzahl unterschiedlicher Rahmen-und Flügelprofile verarbeiten.

Die U-förmige Spannvorrichtung besteht aus zwei Hälften, die durch eine Führung miteinander verbunden sind. Über eine Spindel, welche über ein Handrad bedient wird, können beide Teile zusammengezogen werden und die eingelegten Teile so verspannt werden.

In einer Ausführungsform umfasst das erfindungsgemäße Werkzeug eine Basisplatte, auf der zwei plattenförmige Spannbacken angeordnet sind, die lotrecht auf der Basisplatte stehen. Die Spannbacken sind parallel zueinander angeordnet und mindestens eine der beiden Spannbacken ist in senkrecht zu den Spannbacken verlaufenden Führungen der Basisplatte beweglich. In einer Ausführungsform sind beide Spannbacken beweglich. In einer Ausführungsform sind eine oder beide Spannbacken über eine oder mehrere Gewindespindeln bewegbar. In einer anderen Ausführungsform erfolgt die Bewegung einer Spannbacke oder beider Spannbacken manuell und die Spannbacken werden über Federn, Klammern oder elastische Bänder gegeneinander verspannt.

Die Mittel zur Positionierung und Fixierung eines Bohrbildes des zu montierenden Rollenbands auf dem Rahmenprofil und dem Flügelprofil des erfindungsgemäßen Werkzeugs umfassen mindestens eine Bohrschablone mit Öffnungen, die dem Bohrbild des zu montierenden Rollenbands entsprechen.

Die mindestens eine Bohrschablone ist dafür konfiguriert, auf das Rahmenprofil und das Flügelprofil aufgesetzt zu werden. Eine Unterseite der mindestens einen Bohrschablone weist ein Distanzelement auf, das dafür konfiguriert ist, in den Zwischenraum zwischen dem Rahmenprofil und dem Flügelprofil einzugreifen.

In einer Ausführungsform sind in den Öffnungen der mindestens einen Bohrschablone Bohrbuchsen angeordnet. Die Bohrbuchsen bestehen aus Metall, beispielsweise aus gehärtetem Stahl. Die Bohrbuchsen stellen eine zusätzliche Führung des Bohrers beim Bohren der Profile bereit und verhindern eine Beschädigung der Bohrschablone beim Bohrvorgang.

In einer weiteren Ausführungsform weist die mindestens eine Bohrschablone an ihrer Unterseite, also der auf die zu bearbeitenden Profile aufgesetzten Oberfläche, Aussparungen um die Mündungen der Bohrbuchsen auf. Diese Aussparungen (Spankammern) dienen der Aufnahme von durch den Bohrvorgang erzeugten Bohrspänen, so dass diese nicht in die Bohrbuchsen gelangen und sich dort verklemmen und/oder zu Abrieb an Bohrer und Bohrbuchse führen können. In einer Ausführungsform ist um die Mündung jeder einzelnen Bohrbuchse eine Aussparung vorgesehen, in einer anderen Ausführungsform umschließt eine Aussparung die Mündungen mehrerer oder sogar aller Bohrbuchsen der Bohrschablone.

Die mindestens eine Bohrschablone weist mindestens eine Anschlagstange auf, die parallel zur Längsachse des auf der mindestens einen Auflage angeordneten Rahmenprofils verläuft und an einem Ende mindestens einen Anschlag aufweist. Über die Anschlagstange erfolgt eine Ausrichtung der Bohrschablone, entlang der Längsachse der zu bearbeitenden Profile. Die Anschlagstange wird vor Beginn der Arbeiten einmalig auf das gewünschte Maß eingestellt. Die Bohrschablone kann dann über den Anschlag einfach in der erforderlichen Position auf den Profilen positioniert und fixiert werden.

In einer Ausführungsform sind am Ende der Anschlagstange austauschbare Distanzstücke montiert. Die Distanzstücke werden eingesetzt, um eine erhöhte Position einer Tür im Rahmen zu realisieren. Die unteren Bohrbilder im Rahmenprofil und im Flügelprofil sind um ein bekanntes Maß zueinander verschoben. Sitzt die gesamte Tür erhöht im Rahmen, ergibt sich ein Spalt zwischen Boden und horizontalen Türrahmenprofil und ermöglicht dadurch die Montage verschiedener Dichtungen. Soll derselbe Bohrbildabstand erzeugt werden, muss das austauschbare Distanzstück so gestaltet sein, dass es an den Stirnseiten beider Profile anliegt. In einer Ausführungsform ist das Distanzstück mit einer schwenkbaren Lasche versehen, die bei einer Drehung um 90° einen nicht abgesetzten Anschlag ergibt.

In einer Ausführungsform umfasst die mindestens eine Bohrschablone zwei Teile, die in einer Richtung quer zur Längsachse des auf der mindestens einen Auflage angeordneten Rahmenprofils relativ zueinander bewegbar sind. In einer Ausführungsform sind die beiden Teile durch Gewindespindeln miteinander verbunden und können durch Handräder relativ zueinander bewegt werden. So kann ein Vorsprung des Rahmenprofils oder des Flügelprofils zwischen den beiden Teilen eingeklemmt werden, um eine zusätzliche Fixierung der Bohrschablone auf den Profilen zu bewirken.

In einer Ausführungsform des Werkzeugs bestehen die mindestens eine Auflage und/oder die mindestens zwei beweglichen Spannbacken und/oder die mindestens eine Bohrschablone aus Kunststoff. Dies bietet den Vorteil, dass die Gefahr einer Beschädigung der Profile, insbesondere der sichtbaren Oberflächen der Profile, während der Bearbeitung minimiert wird.

Beispiele geeigneter Kunststoffe umfassen thermoplastische Kunststoffe wie Polyoxymethylen (POM), Poly-(Acrylnitril-Butadien-Styrol) (ABS), Poly-(Acrylester-Styrol-Acrylnitril) (ASA), Polycarbonat (PC), Polymethylmethacrylat (PMMA), glykolmodifiziertes Polyethylenterephthalat (PETG), Polymilchsäure (PLA), Polyvinylacetat (PVA), hochschlagfestes Polystyrol (HIPS), thermoplastische Elastomere (TPE), Polyamid, und Polyolefine wie Polypropylen.

In einer Ausführungsform des Werkzeugs sind die mindestens eine Auflage und/oder die mindestens zwei beweglichen Spannbacken und/oder die mindestens eine Bohrschablone durch 3D-Druck hergestellt.

In einer weiteren Ausführungsform werden die mechanischen Eigenschaften der Kunststoffteile durch Einbringen von Verstärkungselementen aus Metall verbessert, beispielsweise durch Einbringen von Metallstiften in mechanisch besonders beanspruchte Teile wie die Spannbacken.

In einer anderen Ausführungsform bestehen das erfindungsgemäße Werkzeug oder Teile davon aus beschichtetem Metall, z.B. mit PTFE beschichtetem Aluminium oder mit PTFE beschichtetem Stahl.

Gegenstand der Erfindung ist auch ein Verfahren gemäß Anspruch 7, zur Montage eines Rollenbands auf einem Rahmenprofil und einem zugeordneten Flügelprofil (300) mit dem erfindungsgemäßen Werkzeug.

In einer Ausführungsform des Verfahrens werden in Schritt a) das Rahmenprofil und das Flügelprofil so in dem Werkzeug fixiert, dass die Stirnenden des Rahmenprofils und des Flügelprofils bündig sind.

In Schritt b) wird mindestens eine Bohrschablone, die eine parallel zur Längsachse des auf der mindestens einen Auflage angeordneten Rahmenprofils verlaufende Anschlagstange mit mindestens einem Anschlag an einem Ende aufweist, so auf das Rahmenprofil und das Flügelprofil aufgesetzt, dass der mindestens eine Anschlag an einem Ende des Rahmenprofils anliegt.

In einer Ausführungsform des Verfahrens wird die Anschlagsstange in der Bohrschablone auf das gewünschte Maß eingestellt und mit einem Gewindestift fixiert. Beide Profile werden in das Werkzeug eingelegt, so dass sie auf der mindestens einen Auflage aufliegen. Die Stirnseiten der Profile werden bündig zueinander ausgerichtet. Die Bohrschablone mit der Anschlagsstange wird aufgelegt, wobei der Anschlag am Ende der Anschlagstange die Bohrschablone positioniert. Die Spannbacken des Werkzeugs werden geschlossen. Beide Profile sind nun fixiert.

In einer weiteren Ausführungsform des Verfahrens umfasst die mindestens eine Bohrschablone zwei Teile, die in einer Richtung quer zur Längsachse des auf der mindestens einen Auflage angeordneten Rahmenprofils relativ zueinander bewegbar sind. Die beiden Teile werden in Schritt b) nach dem Aufsetzen der mindestens einen Bohrschablone auf das Rahmenprofil und das Flügelprofil gegeneinander fixiert. In einer Ausführungsform werden die die beiden Teile durch Handräder aufeinandergedrückt und klemmen dadurch einen Vorsprung eines der beiden Profile ein. Die Bohrschablone ist nun auf beiden Profilen fixiert. Danach kann die Bohrbearbeitung durchgeführt werden.

Gegenstand der Erfindung ist auch die Verwendung eines erfindungsgemäßen Werkzeugs beim Zusammenbau von Türen oder Fenstern aus Profilen.

Das erfindungsgemäße Werkzeug und das damit durchführbare Verfahren bieten eine Reihe von Vorteilen. Durch das gleichzeitige Bohren beider Profile sind die Bohrbilder immer in der korrekten Position zueinander. Eine Abweichung der Position des Bohrbildes im Flügel von der des Bohrbildes im Rahmen ist nicht möglich, da beide Bohrbilder in einem Arbeitsgang durch dieselbe Bohrschablone angebracht werden. Die genaue Ausrichtung der Bohrbilder ist einfacher und bedarf keiner großen Sorgfalt. Sind mehrere gleichartige Fenster oder Türen zu bearbeiten, kann das Werkzeug für alle verwendet werden, ohne jeweils neu eingestellt werden zu müssen. Die Montage des Rollenbands kann bereits im Werkzeug erfolgen. Insgesamt kann so eine große Zeitersparnis beim Zusammenbau von Türen oder Fenstern aus Profilen erzielt werden.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in den Zeichnungen schematisch dargestellt und wird unter Bezugnahme auf die Zeichnungen weiter beschrieben. Es zeigen:
- Figur 1: eine schematische perspektivische Darstellung eines Teils einer Ausführungsform des erfindungsgemäßen Werkzeugs;
- Figur 2: eine schematische perspektivische Darstellung der Ausführungsform von Figur 1 mit eingelegten Profilen;
- Figur 3: eine schematische perspektivische Darstellung einer weiteren Ausführungsform des erfindungsgemäßen Werkzeugs mit eingelegten Profilen;

- Figur 4: eine schematische perspektivische Darstellung einer weiteren Ausführungsform des erfindungsgemäßen Werkzeugs mit eingelegten Profilen und darauf montiertem Rollenband;
- Figur 5: eine schematische perspektivische Darstellung eines Teils einer Ausführungsform des erfindungsgemäßen Werkzeugs;
- Figur 6: eine weitere schematische perspektivische Darstellung des in Figur 5 dargestellten Teils.

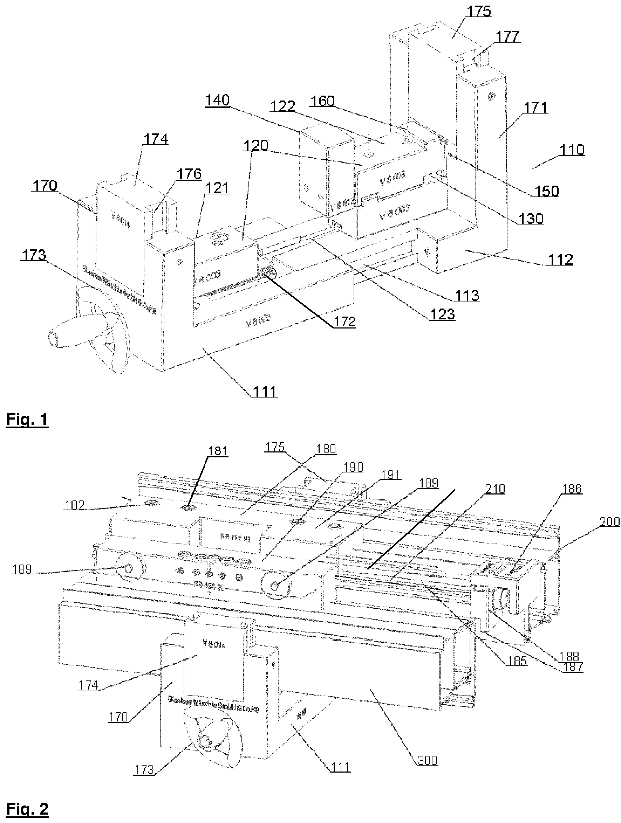

Figur 1 zeigt schematisch einen Teil einer Ausführungsform des erfindungsgemäßen Werkzeugs mit Mitteln 120, 121, 122, 170, 171, 172, 173, 174, 175 zur Fixierung eins Rahmenprofils und eines Flügelprofils in einer Position, in der die Längsachsen des Rahmenprofils und des Flügelprofils parallel ausgerichtet sind und das Rahmenprofil und das Flügelprofil einen vorgegebenen Abstand zueinander aufweisen. In der dargestellten Ausführungsform umfasst das erfindungsgemäße Werkzeug eine U-förmige Spannvorrichtung 110, mit der zwei Profile (Flügel- und Rahmenprofil) gleichzeitig fixiert werden können. Die U-förmige Spannvorrichtung 110 besteht aus zwei Hälften 111, 112, die durch eine Schwalbenschwanzführung 113 miteinander verbunden sind. Über eine Gewindespindel 172, welche über ein Handrad 173 gedreht wird, können beide Teile 111, 112 zusammengezogen werden und die eingelegten Profile so verspannt werden. Die beiden Teile 111, 112 umfassen Spannbacken 170, 171. Diese umfassen auswechselbare Spannblöcke 174, 175, die über Führungen 176, 177 in den Spannbacken 170, 171 verschiebbar sind. Die Spannblöcke 174, 175 sind über seitlich an den Spannbacken 170, 171 angebrachte Schrauben (nicht gezeigt) in einer gewünschten Position fixierbar. Durch die variablen Spannblöcke 174, 175 lässt sich eine große Bandbreite von Profilen unterschiedlicher Höhe einfach und sicher fixieren.

In der dargestellten Ausführungsform ist die Auflage 120 des Werkzeugs durch zwei separate Ausgleichsblöcke 121, 122 realisiert. Ein Ausgleichsblock 122 ist dazu konfiguriert, mit einem Rahmenprofil zu wechselwirken und der andere Ausgleichsblock 121 ist dazu konfiguriert, mit einem Flügelprofil zu wechselwirken. Die Ausgleichsblöcke 121, 122 weisen unterschiedliche Höhen auf, da das Flügelprofil andere Abmessungen als das Rahmenprofil besitzt. Erhebungen 140, 160 auf den Ausgleichsblöcken 121, 122 sind dafür vorgesehen, in entsprechende Aussparungen der Profile einzugreifen, um diese zu fixieren. In der dargestellten Ausführungsform umfasst der Ausgleichsblock 122 drei Einzelteile, und eine Erhebung 140 ist über einen seitlich fixierten Distanzblock realisiert. Aussparungen 130, 150 in der Auflage 120 sind dafür vorgesehen, Vorsprünge der Profile aufzunehmen. In der abgebildeten Ausführungsform sind die Ausgleichsblöcke 121, 122 in eine Schwalbenschwanzführung 123 in der Basis der Hälften 111, 112 der Spannvorrichtung eingesetzt. Dadurch sind die Ausgleichsblöcke 121, 122 senkrecht zur Längsachse der zu bearbeitenden Profile verschiebbar. In der dargestellten Ausführungsform sind die Ausgleichsblöcke 121, 122 in einer beliebigen Position in der Schwalbenschwanzführung 123 durch Schrauben (nicht dargestellt) fixierbar.

Figur 2 zeigt schematisch die in Figur 1 dargestellte Ausführungsform des erfindungsgemäßen Werkzeugs mit eingelegten Profilen 200, 300 und den Mitteln 180, 181, 182, 185, 187 zur Positionierung und Fixierung eines Bohrbildes des zu montierenden Rollenbands auf dem Rahmenprofil 200 und dem Flügelprofil 300. Zur Positionierung und Fixierung eines Bohrbildes des zu montierenden Rollenbands auf dem Rahmenprofil 200 und dem Flügelprofil 300 dient eine Bohrschablone 180 mit Öffnungen 181, die dem Bohrbild des zu montierenden Rollenbands entsprechen. In den Öffnungen 181 der Bohrschablone 180 sind Bohrbuchsen 182 angeordnet. Die Bohrschablone 180 weist eine Anschlagstange 185 auf, die parallel zur Längsachse des Rahmenprofils 200 verläuft und an einem Ende ein Distanzstück 186 mit einem ersten Anschlag 187 und einem zweiten Anschlag 188 aufweist. Die Bohrschablone 180 umfasst zwei Teile 190, 191, die quer zur Längsachse des Rahmenprofils 200 relativ zueinander bewegbar sind. Mit zwei Handrädern 189, die auf Gewindespindeln (nicht gezeigt) aufgesetzt sind, lassen sich die Teile 190, 191 gegeneinander verspannen, wodurch ein Vorsprung 210 des Rahmenprofils 200 eingeklemmt wird.

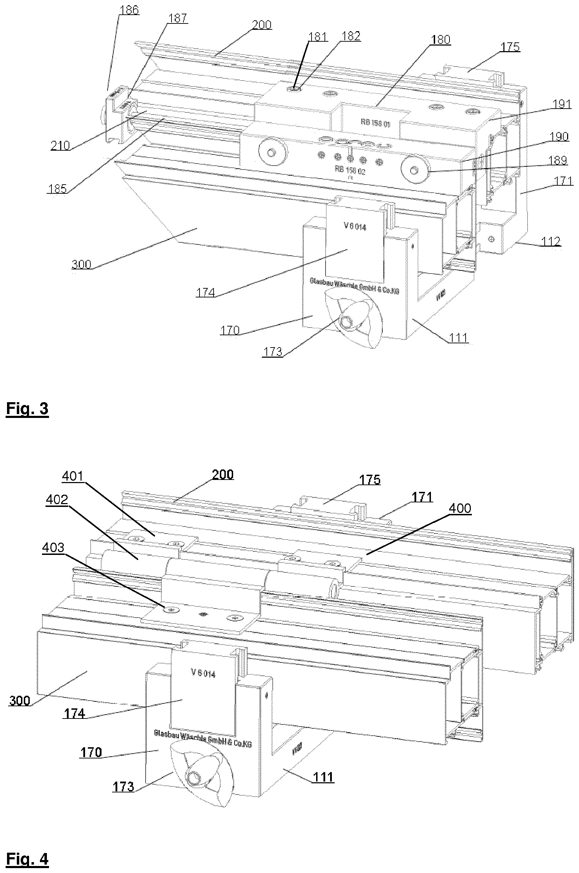

Figur 3 zeigt schematisch eine weitere Ausführungsform des erfindungsgemäßen Werkzeugs mit eingelegten Profilen 200, 300 und den Mitteln 180, 181, 182, 185, 187 zur Positionierung und Fixierung eines Bohrbildes des zu montierenden Rollenbands auf dem Rahmenprofil 200 und dem Flügelprofil 300. Die Profile 200, 300 sind schräg auf Gehrung gesägt. Zur Positionierung und Fixierung eines Bohrbildes des zu montierenden Rollenbands auf dem Rahmenprofil 200 und dem Flügelprofil 300 dient eine Bohrschablone 180 mit Öffnungen 181, die dem Bohrbild des zu montierenden Rollenbands entsprechen. In den Öffnungen 181 der Bohrschablone 180 sind Bohrbuchsen 182 angeordnet. Die Bohrschablone 180 weist eine Anschlagstange 185 auf, die parallel zur Längsachse des Rahmenprofils 200 verläuft und an einem Ende ein Distanzstück 186 mit einem Anschlag 187 aufweist. Der Anschlag 187 ist an einem Vorsprung 210 des Rahmenprofils 200 angesetzt. Während bei der in Figur 2 dargestellten Ausführungsform die Anschlagstange 185 auf der rechten Seite der Bohrschablone 180 angeordnet ist, befindet sie sich bei der in Figur 3 dargestellten Ausführungsform auf der linken Seite der Bohrschablone 180. Die in Figur 2 und Figur 3 dargestellten Ausführungsformen der Bohrschablone 180 erlauben es, jeweils einen Anschlag an unterschiedlichen Enden der zu bearbeitenden Profile zu realisieren, so dass bei Verwendung beider Varianten in einem Arbeitsgang sowohl ein oberes als auch ein unteres Band montiert werden können.

Figur 4 zeigt schematisch die in Figur 2 dargestellte Ausführungsform des erfindungsgemäßen Werkzeugs mit eingelegten Profilen 200, 300 und einem auf dem Rahmenprofil 200 und dem Flügelprofil 300 montierten Rollenband 400. Nachdem das Bohrbild mithilfe der Bohrschablone auf die Profile 200, 300 übertragen und die entsprechenden Bohrungen erzeugt wurden, wird die Bohrschablone entfernt und das Rollenband 400 kann montiert werden. Die Bandrolle 402 des Rollenbands 400 findet dabei Platz in dem Zwischenraum zwischen Rahmenprofil 200 und Flügelprofil 300, die Bandlaschen 401 werden mit Schrauben 403 in den Bohrlöchern der Profile 200, 300 fixiert.

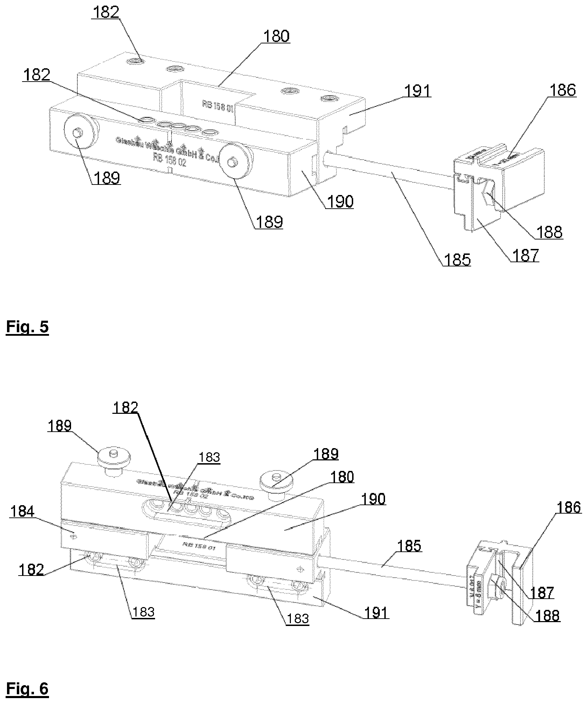

Figur 5 und Figur 6 zeigen perspektivische Ansichten der Bohrschablone 180 aus Figur 2. Die Ansicht in Figur 6 ist um 90° gegenüber der Ansicht von Figur 5 gedreht, so dass die Unterseite der Bohrschablone 180 sichtbar wird, die bei der Durchführung des erfindungsgemäßen Verfahrens auf der Oberseite der Profile aufliegt. Die Bohrschablone 180 weist Öffnungen auf, die dem Bohrbild des zu montierenden Rollenbands entsprechen und in denen Bohrbuchsen 182 angeordnet sind. Die Bohrschablone 180 weist eine Anschlagstange 185 auf, an deren Ende ein Distanzstück 186 mit einem ersten Anschlag 187 und einem zweiten Anschlag 188 angeordnet ist. Die Bohrschablone 180 umfasst zwei Teile 190, 191, die relativ zueinander bewegbar sind. Mit zwei Handrädern 189, die auf Gewindespindeln (nicht gezeigt) aufgesetzt sind, lassen sich die Teile 190, 191 wahlweise aufeinander zubewegen oder voneinander wegbewegen. Die Bohrschablone 180 weist an ihrer Unterseite Spankammern 183 auf, die um die Bohrbuchsen 182 herum verlaufen. Diese sind in Figur 6 gut sichtbar. Die Spankammern 183 nehmen beim Bohrvorgang die Bohrspäne auf, so dass diese nicht in die Bohrbuchsen 182 gelangen und sich dort verkeilen oder Abrieb an der Wand der Bohrbuchsen 182 verursachen. An dem einen Teil 191 der Bohrschablone 180 ist ein Distanzelement 184 ausgebildet, das beim Aufsetzen der Bohrschablone 180 auf Flügelprofil und Rahmenprofil zwischen den beiden Profilen positioniert wird und sie auf Abstand hält. Das Distanzelement 184 ist in Figur 6 ebenfalls gut erkennbar.

### Bezugszeichenliste

- 110: Spannvorrichtung
- 111, 112: bewegliche Teile
- 113: Führung
- 120: Auflage
- 121, 122: Ausgleichsblöcke
- 123: Führung
- 130, 150: Aussparung
- 140, 160: Erhebung
- 170, 171: Spannbacke
- 172: Gewindespindel
- 173: Handrad
- 174, 175: Spannblock
- 176, 177: Führung
- 180: Bohrschablone
- 181: Öffnung
- 182: Bohrbuchse
- 183: Spankammer
- 184: Distanzelement
- 185: Anschlagstange
- 186: Distanzstück
- 187, 188: Anschlag
- 189: Schraube/Spindel mit Handrad
- 190, 191: Schablonenteil
- 200: Rahmenprofil
- 210: Vorsprung
- 300: Flügelprofil
- 400: Rollenband
- 401: Bandlasche
- 402: Bandrolle
- 403: Schraube

## Patentansprüche

1. Werkzeug für die Montage eines Rollenbands (400) auf einem Rahmenprofil (200) und einem zugeordneten Flügelprofil (300), umfassend Mittel (120, 170, 171, 180) zur Fixierung des Rahmenprofils (200) und des Flügelprofils (300) in einer Position, in der die Längsachsen des Rahmenprofils (200) und des Flügelprofils (300) parallel ausgerichtet sind und das Rahmenprofil (200) und das Flügelprofil (300) einen vorgegebenen Abstand zueinander aufweisen; und Mittel (180) zur Positionierung und Fixierung eines Bohrbildes des zu montierenden Rollenbands (400) auf dem Rahmenprofil (200) und dem Flügelprofil (300), wobei die Mittel (120, 170, 171, 180) zur Fixierung des Rahmenprofils (200) und des Flügelprofils (300) eine U-förmige Spannvorrichtung (110) umfassen, mit der Rahmenprofil (200) und Flügelprofil (300) gleichzeitig fixiert werden können, wobei die U-förmige Spannvorrichtung (110) aus zwei Hälften (111, 112) besteht, die durch eine Führung (113) miteinander verbunden sind und über eine Spindel (172), welche über ein Handrad (173) bedient wird, zusammengezogen werden können, und wobei die U-förmige Spannvorrichtung (110) mindestens eine Auflage (120) zur Aufnahme des Rahmenprofils (200) und des Flügelprofils (300) umfasst, wobei die mindestens eine Auflage (120) mindestens eine erste Struktur (130) aufweist, die dafür konfiguriert ist, einen Vorsprung (210) des Rahmenprofils (200) aufzunehmen, und/oder mindestens eine zweite Struktur (140), die dafür konfiguriert ist, in eine Aussparung des Rahmenprofils einzugreifen, so dass eine Verschiebung des Rahmenprofils (200) quer zur Längsachse des Rahmenprofils (200) blockiert wird; und mindestens eine dritte Struktur (150) aufweist, die dafür konfiguriert ist, einen Vorsprung des Flügelprofils (300) aufzunehmen, und/oder mindestens eine vierte Struktur (160), die dafür konfiguriert ist, in eine Aussparung des Flügelprofils (300) einzugreifen, so dass eine Verschiebung des Flügelprofils (300) quer zur Längsachse des Flügelprofils (300) blockiert wird; und wobei die mindestens eine Auflage (120) dafür konfiguriert ist, das Rahmenprofil (200) und das Flügelprofil (300) auf der mindestens einen Auflage (120) so zu fixieren, dass das Rahmenprofil (200) und das Flügelprofil (300) parallel zueinander ausgerichtet sind und einen vorgegebenen Abstand zueinander aufweisen, und wobei die Mittel zur Positionierung und Fixierung eines Bohrbildes des zu montierenden Rollenbands (400) auf dem Rahmenprofil (200) und dem Flügelprofil (300) mindestens eine Bohrschablone (180) mit Öffnungen (181), die dem Bohrbild des zu montierenden Rollenbands (400) entsprechen, umfassen, welche dafür konfiguriert ist, auf das Rahmenprofil (200) und das Flügelprofil (300) aufgesetzt zu werden, wobei eine Unterseite der mindestens einen Bohrschablone (180) ein Distanzelement (184) aufweist, das dafür konfiguriert ist, in den Zwischenraum zwischen dem Rahmenprofil (200) und dem Flügelprofil (300) einzugreifen, und wobei die mindestens eine Bohrschablone (180) mindestens eine Anschlagstange (185) aufweist, die parallel zur Längsachse des auf der mindestens einen Auflage (120) angeordneten Rahmenprofils (200) verläuft und an einem Ende mindestens einen Anschlag (187, 188) aufweist.

2. Werkzeug nach Anspruch 1, bei dem die mindestens eine Auflage (120) zwei separate Ausgleichselemente (121, 122) umfasst, wobei ein Ausgleichselement (122) dazu konfiguriert ist, mit dem Rahmenprofil (200) zu wechselwirken und das andere Ausgleichselement (121) dazu konfiguriert ist, mit dem Flügelprofil (300) zu wechselwirken.

3. Werkzeug nach Anspruch 1 oder 2, bei dem die U-förmige Spannvorrichtung (110) mindestens zwei bewegliche Spannbacken (170, 171) umfasst.

4. Werkzeug nach einem der Ansprüche 1 bis 3, bei dem in den Öffnungen (181) der mindestens einen Bohrschablone (180) Bohrbuchsen (182) angeordnet sind.

5. Werkzeug nach einem der Ansprüche 1 bis 4, bei dem die mindestens eine Bohrschablone (180) zwei Teile (190, 191) umfasst, die in einer Richtung quer zur Längsachse des auf der mindestens einen Auflage (120) angeordneten Rahmenprofils (200) relativ zueinander bewegbar sind.

6. Werkzeug nach einem der Ansprüche 1 bis 5, bei dem die mindestens eine Auflage (120) und/oder die mindestens zwei beweglichen Spannbacken (170, 171) und/oder die mindestens eine Bohrschablone (180) aus Kunststoff bestehen.

7. Verfahren zur Montage eines Rollenbands (400) auf einem Rahmenprofil (200) und einem zugeordneten Flügelprofil (300) mit einem Werkzeug nach einem der Ansprüche 1-6, umfassend die Schritte
a) Fixieren des Rahmenprofils (200) und des Flügelprofils (300) in der U-förmigen Spannvorrichtung (110),
b) Positionierung und Fixierung eines Bohrbildes des zu montierenden Rollenbands (400) auf dem Rahmenprofil (200) und dem Flügelprofil (300), indem die Bohrschablone(180), die eine parallel zur Längsachse des auf der mindestens einen Auflage (120) angeordneten Rahmenprofils (200) verlaufende Anschlagstange (185) mit mindestens einem Anschlag (187, 188) an einem Ende aufweist, so auf das Rahmenprofil (200) und das Flügelprofil (300) aufgesetzt wird, dass der mindestens eine Anschlag (187, 188) an einem Ende des Rahmenprofils (200) anliegt,
c) Erzeugen von Bohrungen im Rahmenprofil (200) und im Flügelprofil (300) entsprechend dem Bohrbild und anschließendes Entfernen der Bohrschablone (180),
d) Aufsetzen des Rollenbandes (400) auf das Rahmenprofil (200) und das Flügelprofil (300) und Verschrauben des Rollenbandes (400) mit dem Rahmenprofil (200) und dem Flügelprofil (300) in den in Schritt c) erzeugten Bohrungen, wobei das Rahmenprofil (200) und das zugeordnete Flügelprofil (300) während Schritt d) in der U-förmigen Spannvorrichtung (110) des Werkzeugs fixiert bleiben.

8. Verfahren nach Anspruch 7, bei dem in Schritt a) das Rahmenprofil (200) und das Flügelprofil (300) so in dem Werkzeug fixiert werden, dass die Stirnenden des Rahmenprofils (200) und des Flügelprofils (300) bündig sind.

9. Verfahren nach Anspruch 7 oder 8, bei dem die mindestens eine Bohrschablone (180) zwei Teile (190, 191) umfasst, die in einer Richtung quer zur Längsachse des auf der mindestens einen Auflage (120) angeordneten Rahmenprofils (200) relativ zueinander bewegbar sind, und die beiden Teile (190, 191) in Schritt b) nach dem Aufsetzen der mindestens einen Bohrschablone (180) auf das Rahmenprofil (200) und das Flügelprofil (300) gegeneinander fixiert werden.

10. Verwendung eines Werkzeugs nach einem der Ansprüche 1 bis 6 beim Zusammenbau von Türen oder Fenstern aus Profilen.

## Claims

1. A tool for mounting a roller-band hinge (400) on a frame profile (200) and an associated wing profile (300), comprising means (120, 170, 171, 180) for fixing the frame profile (200) and the wing profile (300) in a position in which the longitudinal axes of the frame profile (200) and of the wing profile (300) are aligned in parallel, and the frame profile (200) and the wing profile (300) have a preset distance to one another; and means (180) for positioning and fixing, on the frame profile (200) and the wing profile (300), a drilling template of the roller-band hinge (400) to be mounted, wherein the means (120, 170, 171, 180) for fixing the frame profile (200) and the wing profile (300) comprise a U-shaped clamping apparatus (110), with which the frame profile (200) and the wing profile (300) can be fixed at the same time, wherein the U-shaped clamping apparatus (110) is composed of two halves (111, 112), which are connected to one another by a guide (113), and can be pulled together via a spindle (172) that is operated using a hand wheel (173), and wherein the U-shaped clamping apparatus (110) comprises at least one support (120) for seating the frame profile (200) and the wing profile (300), wherein the at least one support (120) has at least one first structure (130), which is configured for seating a projection (210) of the frame profile (200), and/or has at least one second structure (140), which is configured for engaging in a recess of the frame profile such that a displacement of the frame profile (200) transverse to the longitudinal axis of the frame profile (200) is blocked; and has at least one third structure (150), which is configured for seating a projection of the wing profile (300), and/or has at least one fourth structure (160), which is configured for engaging in a recess of the wing profile (300) such that a displacement of the wing profile (300) transverse to the longitudinal axis of the wing profile (300) is blocked; and wherein the at least one support (120) is configured for fixing the frame profile (200) and the wing profile (300) on the at least one support (120) such that the frame profile (200) and the wing profile (300) are aligned parallel to one another and have a preset distance to one another, and wherein the means for positioning and fixing, on the frame profile (200) and the wing profile (300) a drilling template of the roller-band hinge (400) to be mounted comprise at least one drilling jig (180) with openings (181) that correspond to the drilling template of the roller-band hinge (400) to be mounted, said drilling jig (180) being configured for being set upon the frame profile (200) and the wing profile (300), wherein a bottom side of the at least one drilling jig (180) has a spacing element (184) configured for engaging in the intermediate space between the frame profile (200) and the wing profile (300), and wherein the at least one drilling jig (180) has at least one stop rod (185) that runs parallel to the longitudinal axis of the frame profile (200) arranged on the at least one support (120) and has at least one stop (187, 188) at one end.

2. The tool according to claim 1, wherein the at least one support (120) comprises two separate equalization elements (121, 122), wherein one equalization element (122) is configured for interacting with the frame profile (200) and the other equalization element (121) is configured for interacting with the wing profile (300).

3. The tool according to claim 1 or 2, wherein the U-shaped clamping apparatus (110) comprises at least two movable clamping jaws (170, 171).

4. The tool according to any one of claims 1 to 3, wherein drilling bushes (182) are arranged in the openings (181) of the at least one drilling jig (180).

5. The tool according to any one of claims 1 to 4, wherein the at least one drilling jig (180) comprises two parts (190, 191) that are movable relative to one another in a direction transverse to the longitudinal axis of the frame profile (200) arranged on the at least one support (120).

6. The tool according to any one of claims 1 to 5, wherein the at least one support (120) and/or the at least two movable clamping jaws (170, 171) and/or the at least one drilling jig (180) are made of plastic.

7. A method for mounting a roller-band hinge (400) on a frame profile (200) and an associated wing profile (300) with a tool according to any one of claims 1 - 6, comprising the steps
a. fixing the frame profile (200) and the wing profile (300) in the U-shaped clamping apparatus (110),
b. positioning and fixing on the frame profile (200) and the wing profile (300) a drilling template of the roller-band hinge (400) to be mounted by setting the drilling jig (180), which has a stop rod (185) running parallel to the longitudinal axis of the frame profile (200) arranged on the at least one support (120), said stop rod having at least one stop (187, 188) at one end, onto the frame profile (200) and the wing profile (300) such that the at least one stop (187, 188) abuts against an end of the frame profile (200),
c. making drillings in the frame profile (200) and in the wing profile (300) corresponding to the drilling template, and then removing the drilling jig (180),
d. setting the roller-band hinge (400) onto the frame profile (200) and the wing profile (300), and screwing the roller-band hinge (400) to the frame profile (200) and the wing profile (300) in the drillings made in step c), wherein the frame profile (200) and the associated wing profile (300) remain fixed in the U-shaped clamping apparatus (110) of the tool during step d).

8. The method according to claim 7, wherein the frame profile (200) and the wing profile (300) are fixed in the tool in step a) such that the facing ends of the frame profile (200) and of the wing profile (300) are flush.

9. The method according to claim 7 or 8, wherein the at least one drilling jig (180) comprises two parts (190, 191) that are movable relative to one another in a direction transverse to the longitudinal axis of the frame profile (200) that is arranged on the at least one support (120), and the two parts (190, 191) are fixed against one another in step b) after the at least one drilling jig (180) is set upon the frame profile (200) and the wing profile (300).

10. A use of a tool according to any one of claims 1 to 6 for assembling doors or windows from profil es.

## Revendications

1. Outil pour le montage d'une paumelle (400) sur un profilé de cadre (200) et un profilé d'aile (300) associé, comprenant des moyens (120, 170, 171, 180) pour fixer le profilé de cadre (200) et le profilé d'aile (300) dans une position, dans laquelle les axes longitudinaux du profilé de cadre (200) et du profilé d'aile (300) sont disposés parallèlement et le profilé de cadre (200) et le profilé d'aile (300) présentent une distance prédéterminée l'un par rapport à l'autre ; et des moyens (180) pour positionner et fixer un schéma de perçage de la paumelle (400) à monter sur le profilé de cadre (200) et le profilé d'aile (300), les moyens (120, 170, 171, 180) pour fixer le profilé de cadre (200) et le profilé d'aile (300) comprenant un dispositif de serrage (110) en forme de U, permettant de fixer simultanément le profilé de cadre (200) et le profilé d'aile (300), le dispositif de serrage (110) en forme de U étant constitué de deux moitiés (111, 112) qui sont reliées entre elles par un guidage (113) et qui peuvent être rassemblées par une broche (172) qui est commandée par un volant (173), et le dispositif de serrage (110) en forme de U comprenant au moins un support (120) pour recevoir le profilé de cadre (200) et le profilé d'aile (300), ledit au moins un support (120) ayant au moins une première structure (130) configurée de manière à recevoir une saillie (210) du profilé de cadre (200), et/ou au moins une deuxième structure (140) configurée pour s'engager dans un évidement du profilé de cadre, de manière à bloquer un déplacement du profilé de cadre (200) transversalement à l'axe longitudinal du profilé de cadre (200) ; et au moins une troisième structure (150) configurée pour recevoir une saillie du profilé d'aile (300) et/ou au moins une quatrième structure (160) configurée pour s'engager dans un évidement du profilé d'aile (300) de manière à bloquer un déplacement du profilé d'aile (300) transversalement à l'axe longitudinal du profilé d'aile (300) ; et ledit au moins un support (120) étant configuré pour fixer le profilé de cadre (200) et le profilé d'aile (300) sur l'au moins un support (120) de telle sorte que le profilé de cadre (200) et le profilé d'aile (300) sont disposés parallèlement l'un par rapport à l'autre et présentent une distance prédéterminée l'un par rapport à l'autre, et les moyens pour positionner et fixer un schéma de perçage de la paumelle (400) à monter sur le profilé de cadre (200) et le profilé d'aile (300) comprenant au moins un gabarit de perçage (180) avec des ouvertures (181) qui correspondent au schéma de perçage de la paumelle (400) à monter, le gabarit de perçage étant configuré pour être posé sur le profilé de cadre (200) et le profilé d'aile (300), une face inférieure dudit au moins un gabarit de perçage (180) présentant un élément d'écartement (184) configuré pour s'engager dans l'espace entre le profilé de cadre (200) et le profilé d'aile (300), et l'au moins un gabarit de perçage (180) présentant au moins une barre de butée (185) qui s'étend parallèlement à l'axe longitudinal du profilé de cadre (200) disposé sur l'au moins un support (120) et qui présente à une extrémité au moins une butée (187, 188).

2. Outil selon la revendication 1, dans lequel ledit au moins un support (120) comprend deux éléments de compensation (121, 122) séparés, un élément de compensation (122) étant configuré pour interagir avec le profilé de cadre (200) et l'autre élément de compensation (121) étant configuré pour interagir avec le profilé d'aile (300).

3. Outil selon la revendication 1 ou 2, dans lequel le dispositif de serrage (110) en forme de U comprend au moins deux mâchoires de serrage (170, 171) mobiles.

4. Outil selon l'une des revendications 1 à 3, dans lequel des canons de perçage (182) sont disposés dans les ouvertures (181) dudit au moins un gabarit de perçage (180).

5. Outil selon l'une des revendications 1 à 4, dans lequel ledit au moins un gabarit de perçage (180) comprend deux parties (190, 191) mobiles l'une par rapport à l'autre dans une direction transversale à l'axe longitudinal du profilé de cadre (200) disposé sur ledit au moins un support (120).

6. Outil selon l'une des revendications 1 à 5, dans lequel l'au moins un support (120) et/ou les au moins deux mâchoires de serrage (170, 171) mobiles et/ou l'au moins un gabarit de perçage (180) sont en matière plastique.

7. Procédé de montage d'une paumelle (400) sur un profilé de cadre (200) et un profilé d'aile (300) associé, au moyen d'un outil selon l'une des revendications 1 à 6, comprenant les étapes suivantes :
a. Fixation du profilé de cadre (200) et du profilé d'aile (300) dans le dispositif de serrage (110) en forme de U,
b. Positionnement et fixation d'un schéma de perçage de la paumelle (400) à monter, sur le profilé de cadre (200) et le profilé d'aile (300), le gabarit de perçage (180), qui comprend une barre de butée (185) s'étendant parallèlement à l'axe longitudinal du profilé de cadre (200) disposé sur l'au moins un support (120) et comportant au moins une butée (187, 188) à une extrémité, étant placé sur le profilé de cadre (200) et le profilé d'aile (300) de telle sorte que la au moins une butée (187, 188) s'applique contre une extrémité du profilé de cadre (200),
c. Réalisation de perçages dans le profilé de cadre (200) et dans le profilé d'aile (300) selon le schéma de perçage et retrait du gabarit de perçage (180),
d. Mise en place de la paumelle (400) sur le profilé de cadre (200) et le profilé d'aile (300) et vissage de la paumelle (400) sur le profilé de cadre (200) et le profilé d'aile (300) dans les perçages créés à l'étape c), le profilé de cadre (200) et le profilé d'aile (300) associé restant fixés dans le dispositif de serrage (110) en forme de U de l'outil pendant l'étape d).

8. Procédé selon la revendication 7, dans lequel, à l'étape a), le profilé de cadre (200) et le profilé d'aile (300) sont fixés dans l'outil de manière à ce que les extrémités frontales du profilé de cadre (200) et du profilé d'aile (300) soient alignées.

9. Procédé selon la revendication 7 ou 8, dans lequel l'au moins un gabarit de perçage (180) comprend deux parties (190, 191) qui sont mobiles l'une par rapport à l'autre dans une direction transversale à l'axe longitudinal du profilé de cadre (200) disposé sur l'au moins un support (120), et les deux parties (190, 191) sont fixées l'une contre l'autre à l'étape b) après la mise en place dudit au moins un gabarit de perçage (180) sur le profilé de cadre (200) et le profilé d'aile (300).

10. Utilisation d'un outil selon l'une des revendications 1 à 6 lors de l'assemblage de portes ou de fenêtres à partir de profilés.
